# EUROPEAN PATENT APPLICATION

(11) **EP 3 460 618 A1**
(43) Date of publication of application: **27.03.2019**
(21) Application number: 18180070.7
(22) Date of filing: 27.06.2018
(51) Int. Cl.: G05D 23/13, E03C 1/00

(54) **THERMOSTATIC FAUCET**

(30) Priority: 26.09.2017 CN 201710877655
(71) Applicant: Fujian Xihe Sanitary Ware Technology Co., Ltd., Nan'an City, Fujian 362304 (CN)
(72) Inventor: LIN, Xiaofa, Nan'An City, Fujian (CN); LIN, Xiaoshan, Nan'An City, Fujian (CN); HUANG, Changzhi, Nan'An City, Fujian (CN); ZHOU, Lin, Nan'An City, Fujian (CN)
(74) Representative: Schröer, Gernot H.

(57) **Abstract**

The present application discloses a thermostatic faucet comprising a faucet body, a water on-off unit used for controlling turn-on and turn-off of the thermostatic faucet, a temperature regulating unit used for controlling a water temperature and a flow rate regulating unit. The flow rate regulating unit includes a flow rate valve core arranged in the faucet body and a flow rate controller movable and able to drive the flow rate valve core to regulate water flow rate.

## Description

### Technical Field

The present application relates to but is not limited to the field of sanitary ware, and in particular, to a thermostatic faucet.

### Background

The thermostatic faucets currently available in the market have separate parts for water on-off and temperature regulation. Even if there are a few faucets that use the same control key for water on-off and temperature regulation, the water flow rate of such faucets is always unchangeable.

### Summary

The following is a summary of the subject matter described in detail in this text. This summary is not intended to limit the protection scope of the claims.

Since the existing thermostatic faucets cannot control the water flow rate, it brings a lot of inconvenience to users.

The present application provides a thermostatic faucet that can regulate the water flow rate when in use.

To achieve the above purpose, the technical scheme of the present application is: a thermostatic faucet comprising a faucet body, a water on-off unit used for controlling turn-on and turn-off of the thermostatic faucet, a temperature regulating unit used for controlling a water temperature and a flow rate regulating unit, wherein the flow rate regulating unit comprises a flow rate valve core arranged in the faucet body and a flow rate controller which is movable and able to drive the flow rate valve core to regulate water flow rate.

The thermostatic faucet of the present application controls the turn-on and turn-off the thermostatic faucet by the water on-off unit, regulates the temperature of the discharged water by the temperature regulating unit, and controls the flow rate of the discharged water by the flow rate regulating unit, so that the thermostatic faucet of the present application has the functions of controlling the water on-off, regulating the water temperature and regulating the water flow rate.

After reading and understanding the drawings and detailed depictions, other aspects can be understood.

### Brief Description of Drawings

The drawings described herein are used to provide understanding of the present application, and constitute a part of the present application. The exemplary embodiments of the present application and descriptions thereof are used to explain the present application and do not constitute limitations to the present application. In the drawings:
FIG. 1 is a structural schematic diagram of a thermostatic faucet according to an embodiment of the present application;
FIG. 2 is an exploded structural schematic diagram of a thermostatic faucet according to an embodiment of the present application;
FIG. 3 is a sectional structural schematic diagram of a thermostatic faucet according to an embodiment of the present application;
FIG. 4 is a further sectional structural schematic diagram of a thermostatic faucet according to an embodiment of the present application;
FIG. 5 is an exploded structural schematic diagram of a thermostatic faucet in use, according to an embodiment of the present application.

### Detailed Description

The present application will be further described in detail below with reference to the drawings and embodiments. It should be understood that the specific embodiments described herein are only used to explain the present application and are not used to limit the present application.

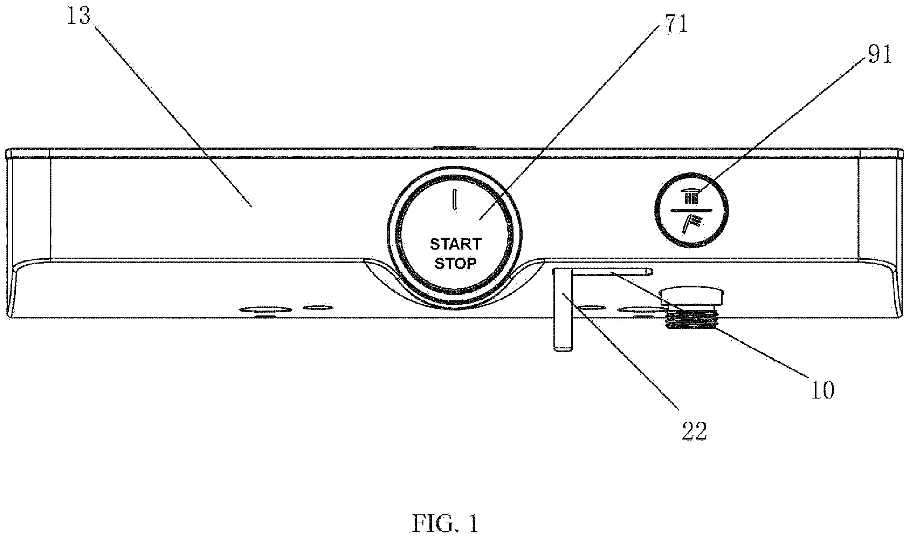

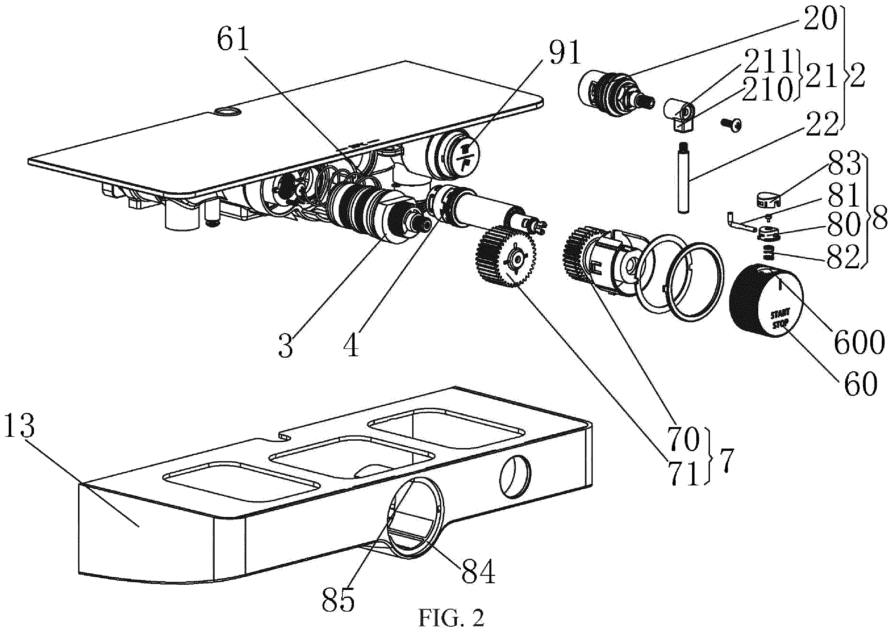

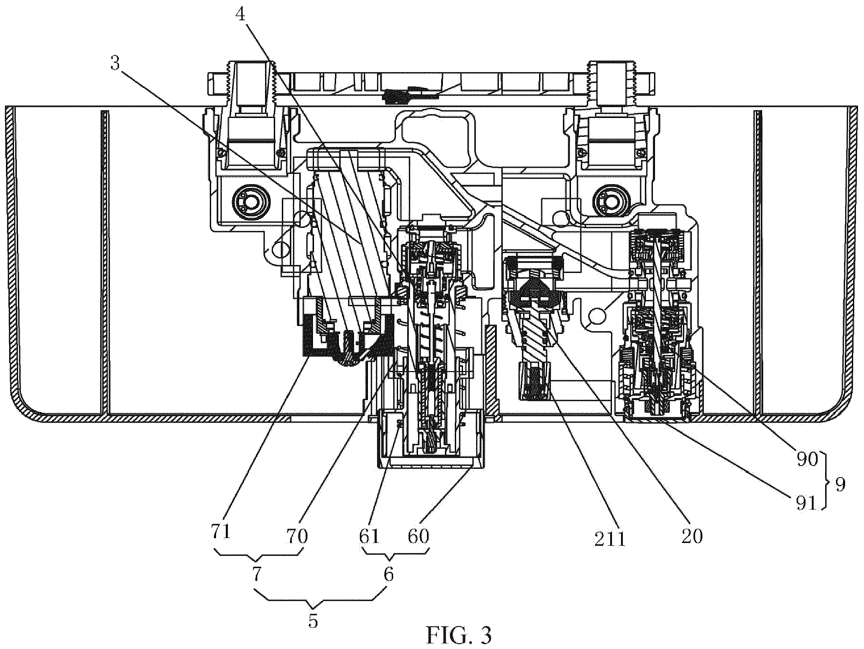

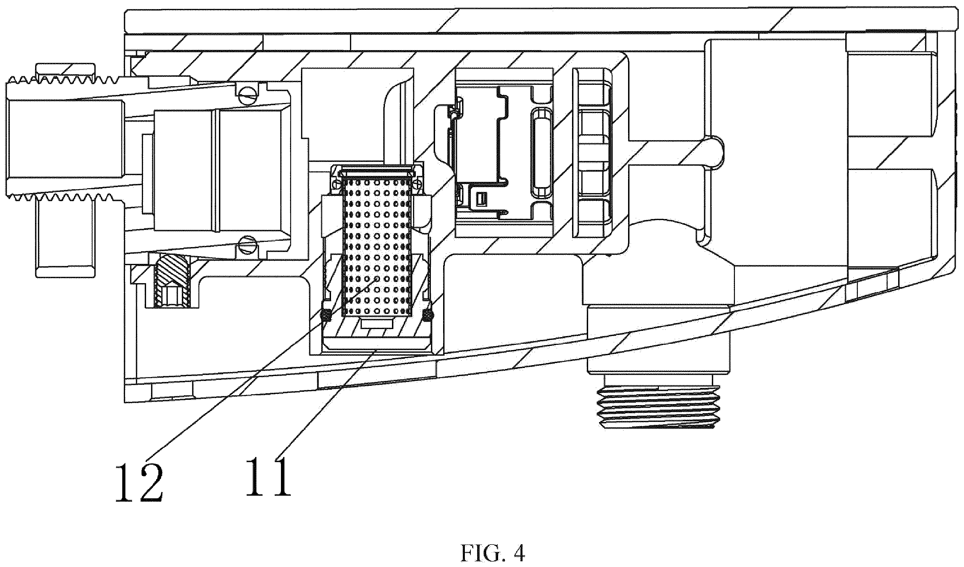

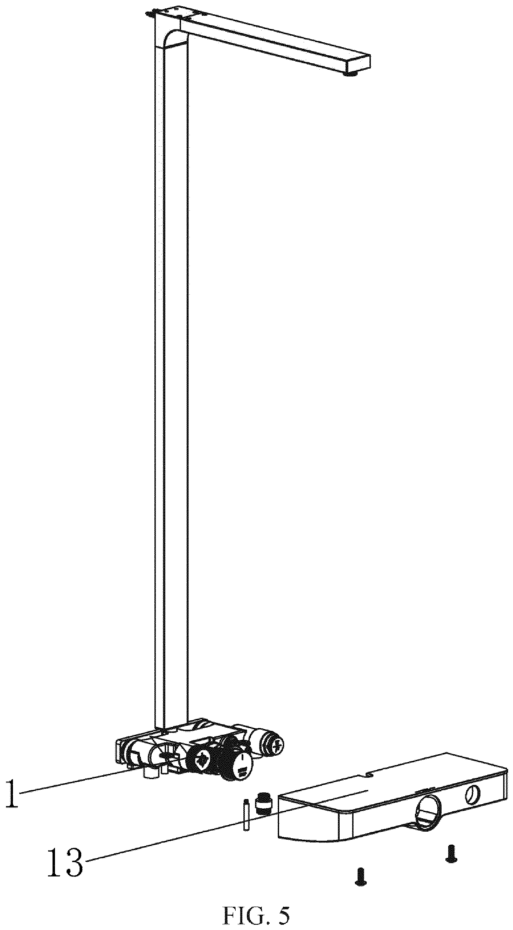

Referring to FIGS. 1 to 5, a thermostatic faucet is exemplarily shown according to various aspects of the present application, including a faucet body 1 and a flow rate regulating unit 2, the flow rate regulating unit 2 including a flow rate valve core 20 and a flow rate controller 22, the flow rate valve core 20 being arranged in the faucet body 1, and the flow rate controller 22 being movable and able to drive the flow rate valve core 20 to move, thereby regulating the water flow rate.

According to some embodiments of the present application, the flow rate controller 22 may be a rotary lever, the faucet body 10 is provided with a mounting slot 10, and the rotary lever 22 passes through the mounting slot 10 and is rotatable relative to the mounting slot 10. When it is required to regulate the water flow rate, the rotary lever 22 is manipulated to drive the flow rate valve core 20 to rotate.

In the embodiment shown in the drawings, the flow rate regulating unit 2 further includes a valve core driving stub 21, the valve core driving stub 21 and the flow rate valve core 20 are arranged in the faucet body 1 together, the valve core driving stub 21 includes a stub body 210, with a connecting sleeve 211 integrally connected to an upper portion of the stub body 210, the extending direction of the stub body 210 being perpendicular to an axis of the connecting sleeve 211. The upper end of the rotary lever 22 is fixedly connected to the lower portion of the stub body 210. The mounting slot 10 is disposed at a lower portion of the faucet body 1, a lower end of the rotary lever 22 passes through the mounting slot 10, and the rotary lever 22 is rotatable in the mounting slot 10 to drive the flow rate valve core 20, thereby regulating the flow rate.

Herein, the connecting sleeve 211 may be a splined sleeve, with a spline provided on the inner side of the connecting sleeve 211. Correspondingly, a spline may be provided on the actuator of the flow rate valve core 20. The connecting sleeve 211 is sleeved over the actuator of the flow rate valve core 20, with the spline in the connecting sleeve 211 meshed with the spline on the flow rate valve core 20.

It should be appreciated that the shape of the interior of the connecting sleeve 211 may also be cooperatively designed as a square or other non-circular shape, to match the actuator of the flow rate valve core 20 so that the connecting sleeve 211 is sleeved over the flow rate valve core 20 in a circumferentially fixed manner.

The thermostatic faucet of the present application may further include a temperature regulating unit, the temperature regulating unit including a temperature regulating valve core 3 and a temperature regulating controller, the temperature regulating valve core 3 being arranged in the faucet body 1, and the temperature regulating controller being movable and able to drive the temperature regulating valve core 3 to move, thereby regulating the water temperature.

Herein, the temperature regulating controller may be a temperature regulating knob, and correspondingly, the temperature regulating valve core 3 may be a rotation-type temperature regulating valve core. By rotating the temperature regulating knob, the temperature regulating knob can drive the temperature regulating valve core to rotate, so as to regulate the water temperature. Alternatively, the temperature regulating controller may be a temperature regulating button, and correspondingly, the temperature regulating control valve core 3 may be a press-type temperature regulating valve core. By pressing the temperature regulating button, the temperature regulating button can drive the temperature regulating valve core to move, so as to regulating the water temperature.

The thermostatic faucet of the present application may further include a water on-off unit including a water on-off valve core 4 and a water on-off controller. The water on-off valve core 4 is arranged in the faucet body 1, and the water on-off controller is movable and able to drive the water on-off valve core, thereby controlling the turn-on and turn-off of the thermostatic faucet.

Herein, the water on-off controller may be a water on-off button, and correspondingly, the water on-off valve core 4 may be a press-type water on-off valve core. By pressing the water on-off button, the water on-off button can drive the water on-off valve core 4 to move, so that the water on-off valve core 4 is in an open position, thereby the thermostatic faucet is turned on and can discharge water. By pressing the water on-off button again, the water on-off valve core 4 is in a closure position, thereby the thermostatic faucet is turned off and stopped discharging water. Alternatively, the water on-off controller may be a water on-off knob, and correspondingly, the water on-off valve core 4 may be a rotation-type water on-off valve core. By rotating the water on-off knob, the water on-off knob can drive the water on-off valve core 4 to rotate so that the water on-off valve core 4 is in an open position, thereby the thermostatic faucet is turned on and can discharge water. By rotating the water on-off knob in the opposite direction, the water on-off valve core 4 is in a closure position, thereby the thermostatic faucet is turned off and stopped discharging water.

According to some embodiments of the present application, the temperature regulating controller and the water on-off controller may be integrated into one piece, forming a controller 60 that can both regulate the temperature and control the water. The controller 60 can be rotated and moved, and the controller 60 is rotated to drive one of the temperature regulating valve core 3 and the water on-off valve core 4 to regulate the water temperature or control the discharge of water; the controller 60 is moved to drive the other one of the temperature regulating valve core 3 and the water on-off valve core 4 to control the water or regulate the water temperature.

In the embodiment shown in the drawings, the water on-off valve core 4 is a press-type water on-off valve core and the temperature regulating valve core 3 is a rotation-type temperature regulating valve core. The controller 60 is rotated to drive the temperature regulating valve core 3 to regulate the water temperature, wherein, when the controller 60 is rotated leftward, the water temperature decreases (or increases), and when the controller 60 is rotated rightward, the water temperature increases (or decreases). The controller 60 is pressed to drive the water on-off valve core 4 to control the thermostatic faucet to start to discharge water, and the controller 60 is pressed again to control the thermostatic faucet to stop discharging water.

In the embodiment shown in the drawings, the temperature regulating unit further includes a rotary assembly 7, the rotary assembly 7 including a driving gear 70 and a driven gear 71 that are meshed with each other, the driving gear 70 being sleeved over the water on-off valve core 4 and fixedly connected to the controller 60, the driven gear 71 being sleeved over the temperature regulating valve core 3 and fixedly connected to the knob of the temperature regulating valve core 3, thereby the rotation of the controller 60 drives the knob of the temperature regulating valve core 3 to rotate, regulating the water temperature.

The water on-off unit further includes a spring 61 sleeved over the water on-off valve core 4, with one end located inside and against the faucet body 1 and the other end located inside and against the controller 60, and a press-type actuator of the water on-off valve core 4 is arranged inside the controller 60. The spring 61 is used to cause the controller 60 to at least partially reverse after the controller 60 is released.

In the embodiment shown in the drawings, the controller 60 may be provided with a temperature limiting assembly 8 which includes a stop member 81 connected to the controller 60. The faucet body 1 is provided with a blocking portion 85. When a set value (e.g., 38° C) is reached as the controller 60 is rotated to regulate the water temperature, the stop member 81 engages with the blocking portion 85, preventing the controller 60 from continuing to move and raising the water temperature further so that the water temperature will not be higher than 38°C.

The temperature limiting assembly 8 further includes a temperature limiting controller 80 mounted on the controller 60 and movable relative to the controller 60, with the stop member 81 fixedly connected to the temperature limiting controller 80. When the stop member 81 engages with the blocking portion 85 to prevent the controller 60 from continuing to move, the temperature limiting controller 80 is movable and able to drive the stop member 81 to move further, so that the stop member 81 moves beyond the blocking portion 85, and at this time, the controller 60 can continue to move to regulate the temperature, so that the water temperature can be regulated to a temperature higher than 38 °C.

In the embodiment shown in the drawings, a guiding groove 84 is further provided in the faucet body 1, and when the controller 60 is moved, the stop member 81 is moved in the guiding groove 84; the blocking portion 85 is provided in the guiding groove 84, so as to cooperate with the stop member 81.

In the embodiment shown in the drawings, the temperature limiting controller 80 is a temperature limiting button arranged in the mounting hole 600 which is provided in the side wall of the controller 60. A press-type reset spring 82 is provided between the temperature limiting button 80 and the bottom of the mounting hole 600 for resetting the temperature limiting button 80. A button cover 83 is covered on the temperature limiting button 80.

The stop member 81 is a latch which is an L-shaped bent member, with its long side inserted into the side wall of the temperature limiting button 80 and fixedly connected to the temperature limiting button 80, and its short side cooperating with the blocking portion 85.

The blocking portion 85 is a blocking step provided in the guiding groove 84. The short side of the latch 81 is inserted into the guiding groove 84, and is movable in the guiding groove 84 when the controller 60 is rotated. The short side of the latch 81 may be blocked by the blocking step 85 and the temperature limiting button 80 is pressed to drive the short side of the latch 81 so as to pass over the blocking step 85.

It should be appreciated that, in the embodiments where the temperature regulating controller and the water on-off controller are two independent controllers, a temperature limiting assembly may also be provided on the temperature regulating controller. In this case, the structure of the temperature limiting assembly may or may not be the same as the temperature limiting assembly shown in the drawings.

The thermostatic faucet of the present application may further include a waterway switching unit 9 which includes a waterway switching valve core 90 and a waterway switching controller 91. In the embodiment shown in the drawings, the waterway switching controller 91 is a waterway switching press key.

The waterway switching valve core 90 is arranged inside the faucet body 1, and the waterway switching press key 91 is used to control the waterway switching valve core 90, so as to achieve switching between multiple outflow waterways in the faucet body.

In the embodiment shown in the drawings, a quick coupler 11 is installed in the lower part of the faucet body 1, and a filter 12 is provided in the quick coupler 11. The filter 12 is disposed in the waterway within the faucet body 1 for filtering impurities and the like in the water, so as to provide users with cleaner water, and at the same time prevent the blockage of the waterways caused by the accumulation of impurities, extending the service life of the product.

The quick coupler 11 can be easily disassembled to facilitate the cleaning or replacement of the filter 12.

In the embodiment shown in the drawings, the faucet body 1 further includes a housing 13which is a one-piece structure. The housing 13 covers the faucet body 1 to facilitate disassembling and replacement of components.

The method for using the thermostatic faucet of the present application will be specifically described below with reference to the drawings.

In use, the controller 60 is pressed to drive the press-type actuator of the water on-off valve core 4, so as to open the waterway.

By rotating the controller 60, the driving gear 70 connected to the controller 60 drives the driven gear 71 meshed with the driving gear 70 during rotation, and the rotation of the driven gear 71 drives the temperature regulating valve core 3 to rotate, thereby regulating the temperature. When the water with a temperature exceeding 38°C is needed, the temperature limiting button 80 on the temperature limiting assembly 8 needs to be pressed, and then the latch 81 is driven to move downwards and separated from the blocking step 85 of the guiding groove 84. Only when the short side of the latch 81 is separated from the blocking step 85 and the controller 60 is continually rotated can the water temperature continues to be regulated. Therefore, it is necessary to provide an indication to the user when continuing to increase the water temperature, to prevent occurrence of events such as scalds caused by false rotation.

When the water flow rate needs to be regulated, all the user needs to do is manipulating the lever 22, and the lever 22 moving in the mounting slot 10 drives the valve core driving stub 21 to move, such that the connecting sleeve 211 on the valve core driving stub 21 drives the actuator of flow rate valve core 20 to rotate, thereby regulating the water flow rate by manipulating lever is achieved, and the difficulty in rotating the knob due to a slippery hand when in use is avoided. This is convenient for regulation of the water flow rate in the bathroom environment, especially if the hand is coated with shower gel.

In addition, the outflow waterway can be switched by the waterway switching press key 91.

From the above depictions for the present application, the present application has the following advantages:
1. The present application integrates the water on-off switching and temperature regulating function on the same controller, which is convenient for use and operation, and at the same time, the water flow can also be regulated which is convenient for use and improves the user experience.
2. By means of the cooperation of the valve core driving stub and the rotary lever, the present application changes the regulation mode from a rotary type of the conventional valve core to a lever type, thereby avoiding difficulty in rotating the knob due to a slippery hand when in use, facilitating regulation of the water flow rate in the bathroom environment, especially if the hand is coated with shower gel.
3. The present application combines the press-type switch and the temperature regulating knob into one piece, so that the product is simple, working smoothly, aesthetically pleasing and easy to operate.
4. The present application is also provided with a temperature limiting assembly with a temperature limiting function, preventing occurrence of accidents caused by accidental regulation of the water temperature to an excessively high temperature when in use. And the on-off switch, temperature control and temperature limiter is integrated into one controller, which is convenient for operation.
5. The present application is provided with a filter within a quick coupler to filter out impurities and the like in the water, so as to provide the users with cleaner water, and at the same time prevent the blockage of the waterways caused by the accumulation of impurities, extending the service life of the product.
6. The one-piece housing of the present application is convenient for disassembling and replacement of components.

The foregoing depictions have illustrated and described some embodiments of the present application, and as described above, it should be appreciated that the present application is not limited to the forms disclosed in this text, and it should not be regarded as exclusion of other embodiments but can be used in various other combinations, modifications, and environments, and can be varied within the scope of the application concept described in this text according to the above teaching or technologies or knowledge in the relevant field.

## Claims

1. A thermostatic faucet **characterized by** comprising a faucet body (1), a water on-off unit for controlling turn-on and turn-off of the thermostatic faucet, a temperature regulating unit for controlling water temperature, and a flow rate regulating unit (2),
wherein the flow rate regulating unit (2) comprises a flow rate valve core (20) arranged within the faucet body (1) and a flow rate controller (22) which is movable and able to drive the flow rate valve core (20) to regulate water flow rate.

2. The thermostatic faucet according to claim 1, wherein the flow rate controller (22) is a rotary lever, the faucet body (1) is provided with a mounting slot (10), and the rotary lever passes through the mounting slot (10) and is rotatable relative to the mounting slot (10);
wherein manipulation of the rotary lever drives the flow rate valve core (20) to rotate.

3. The thermostatic faucet according to any one of the preceding claims, wherein the temperature regulating unit comprises a temperature regulating valve core (3) arranged within the faucet body (1) and a temperature regulating controller movable and able to drive the temperature regulating valve core (3) to regulate the water temperature.

4. The thermostatic faucet according to claim 3, wherein the temperature regulating controller is a temperature regulating knob.

5. The thermostatic faucet according to claim 3 or 4, wherein the temperature regulating unit further comprises a temperature limiting assembly (8) comprising a stop member (81) which is connected to the temperature regulating controller, and the faucet body (1) is provided with a blocking portion (85), and
wherein when the water temperature reaches a set value by moving the temperature regulating controller, the stop member (81) engages with the blocking portion (85), preventing the temperature regulating controller from continuing to move to raise the water temperature.

6. The thermostatic faucet according to any one of the preceding claims, wherein the water on-off unit comprises a water on-off valve core (4) arranged within the faucet body (1) and a water on-off controller movable and able to drive the water on-off valve core (4) to control the turn-on and turn-off of the thermostatic faucet.

7. The thermostatic faucet according to claim 6, wherein the water on-off controller is a water on-off button.

8. The thermostatic faucet according to claim 1, wherein the temperature regulating unit comprises a temperature regulating valve core (3), the water on-off unit comprises a water on-off valve core (4), and the thermostatic faucet further comprises a controller (60) which can be used as both a temperature regulating controller and a water on-off controller;
wherein the controller (60) is able to be rotated and moved, the controller (60) being rotated to drive one of the temperature regulating valve core (3) and the water on-off valve core (4); and the controller being moved to drive the other of the temperature regulating valve core (3) and the water on-off valve core (4).

9. The thermostatic faucet according to claim 8, wherein the water on-off valve core (4) is a press-type water on-off valve core, and the temperature regulating valve core (3) is a rotary-type temperature regulating valve core,
wherein the controller (60) is rotated to drive the temperature regulating valve core (3); and the controller (60) is pressed to drive the water on-off valve core (4).

10. The thermostatic faucet according to claim 8 or 9, wherein the temperature regulating unit further comprises a temperature limiting assembly (8) comprising a stop member (81) which is connected to the temperature regulating controller, and the faucet body (1) is provided with a blocking portion (85), and
wherein when the water temperature reaches a set value by moving the temperature regulating controller, the stop member (81) engages with the blocking portion (85), preventing the temperature regulating controller from continuing to move to raise the water temperature.

11. The thermostatic faucet according to claim 5 or 10, wherein the temperature limiting assembly (8) further comprises a temperature limiting controller (80) mounted on the temperature regulating controller and movable relative to the temperature regulating controller, and the stop member (81) is fixedly connected to the temperature limiting controller (80), and
wherein the temperature limiting controller (80) can drive the stop member (81) to move, so that the stop member (81) passes beyond the blocking portion (85) and thus the temperature regulating controller is able to continue to move to regulate the temperature.

12. The thermostatic faucet according to claim 11, wherein the temperature limiting controller (80) is a temperature limiting button and the stop member (81) is an L-shaped bent member, with one side of the L-shaped bent member fixedly connected to the temperature limiting button, and the other side of the L-shaped bent member configured for engaging with the blocking portion (85); and
wherein a side wall of the temperature regulating controller is provided with a mounting hole (600) within which the temperature limiting button is arranged, and wherein the temperature limiting assembly (8) further comprises a press-type reset spring (82) provided between the temperature limiting button and the bottom of the mounting hole (600) for resetting the temperature limiting button.

13. The thermostatic faucet according to any one of claims 5 or 10-12, wherein a guide groove (84) is disposed in the faucet body (1) and provided with the blocking portion (85), wherein the stop member (81) moves in the guide groove (84) when the temperature regulating controller is moved.

14. The thermostatic faucet according to any one of the preceding claims, further comprising a waterway switching unit (9) comprising a waterway switching valve core (90) which is arranged in the faucet body (1) and a waterway switching controller (91), and
wherein a plurality of outflow waterways are provided in the faucet body (1), and wherein the waterway switching controller (91) is moved and controls the waterway switching valve core (90) to achieve switching between the plurality of outflow waterways.

15. The thermostatic faucet according to any one of the preceding claims, wherein a quick coupler (11) is arranged on the faucet body (1) and a filter (12) is provided within the quick coupler (11).
